(19) Europäisches Patentamt
European Patent Office
Office européen des brevets

(11) **EP 4 116 885 A1**

(12) **EUROPEAN PATENT APPLICATION**
published in accordance with Art. 153(4) EPC

(43) Date of publication:
**11.01.2023 Bulletin 2023/02**

(21) Application number: **21774382.2**

(22) Date of filing: **25.03.2021**

(51) International Patent Classification (IPC):
**G06N 3/08** $^{(2006.01)}$

(52) Cooperative Patent Classification (CPC):
**G06F 7/52; G06F 17/16; G06N 3/02; G06N 3/08**

(86) International application number:
**PCT/CN2021/082967**

(87) International publication number:
**WO 2021/190597 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 CN 202010232059**

(71) Applicant: **Huawei Technologies Co., Ltd.
Shenzhen, Guangdong 518129, (CN)**

(72) Inventors:
• YOU, Jiangkun
  Shenzhen, Guangdong 518129 (CN)
• GONG, Chen
  Shenzhen, Guangdong 518129 (CN)
• DAN, Xiaoqiang
  Shenzhen, Guangdong 518129 (CN)

(74) Representative: **Maiwald GmbH
Elisenhof
Elisenstraße 3
80335 München (DE)**

(54) **PROCESSING METHOD FOR NEURAL NETWORK MODEL, AND RELATED DEVICE**

(57) A neural network model processing method is provided and relates to the artificial intelligence field. The method includes: obtaining an operation process of a neural network model, where the operation process is represented by at least one first-type operator and a plurality of second-type operators (301); and obtaining a first computation graph of the neural network model based on the operation process (302). In the operation process, the first-type operator includes a boundary identifier, and computational logic of the first-type operator is represented by a group of second-type operators. For any first-type operator, a range of second-type operators included in the any first-type operator is indicated by a boundary identifier in the any first-type operator. The method is used, so that the computational logic of the first-type operator is knowable to a deep learning framework. Therefore, there are more opportunities for optimizing the computation graph, and the deep learning framework can better optimize the computation graph.

Obtain an operation process of a neural network model, where the operation process is represented by at least one first-type operator and a plurality of second-type operators — 301

Determine a first computation graph of the neural network model based on the operation process — 302

FIG. 3

## Description

This application claims priority to Chinese Patent Application No. 202010232059.9, filed with the China National Intellectual Property Administration on March 27, 2020 and entitled "NEURAL NETWORK MODEL PROCESSING METHOD AND RELATED DEVICE", which is incorporated herein by reference in its entirety.

## TECHNICAL FIELD

This application relates to the field of communication technologies, and in particular, to a neural network model processing method and a related device.

## BACKGROUND

Artificial intelligence (artificial intelligence, AI) is a theory, method, technology, and application system that uses a digital computer or a machine controlled by a digital computer to simulate, extend, and expand human intelligence, perceive an environment, acquire knowledge, and use the knowledge to obtain a best result. In other words, artificial intelligence is a branch of computer science, and is intended to understand the essence of intelligence and produce a new intelligent machine that makes a response in a manner similar to human intelligence. Artificial intelligence allows various intelligent machines to have perception, inference, and decision-making functions by studying design principles and implementation methods of the machines. The research in the field of artificial intelligence includes robotics, natural language processing, computer vision, decision-making and inference, human-computer interaction, recommendation and search, an AI basic theory, and the like.

With the rapid AI development, neural networks (for example, deep neural networks) have made great achievements in processing and analysis of various media signals such as images, videos, and voice in recent years. A deep learning framework transforms a neural network model into a computation graph, optimizes the computation graph, and compiles an optimized computation graph into instructions on a hardware platform, to complete compilation of the neural network model on the hardware platform. The instructions obtained through compilation by using the model can be efficiently executed on the hardware platform through graph optimization. Therefore, how to better optimize a computation graph urgently needs to be resolved.

## SUMMARY

Embodiments of this application provide a neural network model processing method, to make a deep learning framework learn computational logic of an operator included in a computation graph. In this way, there are more opportunities for optimizing the computation graph, so that the computation graph can be better optimized.

To achieve the foregoing objectives, embodiments of this application provide the following technical solutions.

A first aspect of this application provides a neural network model processing method. The method may include: A deep learning framework obtains an operation process of a neural network model. The operation process is represented by at least one first-type operator and a plurality of second-type operators. The first-type operator and the second-type operator each may be regarded as a function that can implement a specific function. The first-type operator and the second-type operator may be used to perform a mathematical operation on input data. For example, when the first-type operator and the second-type operator are convolution operators, convolution calculation may be performed on a local area in an input feature image by using a convolution kernel, and linear calculation is performed on data in the input feature image to obtain an output feature. For another example, when the first-type operator and the second-type operator are fully-connected operators, a matrix multiplication may be used to perform linear combination on all input features. The operation process of the neural network model mentioned in this application is a process in which a mathematical operation is performed on input data by using at least the first-type operator and the plurality of second-type operators to obtain output data of the neural network model.

A difference between the first-type operator and the second-type operator lies in that: The deep learning framework can learn computational logic of the first-type operator, but cannot learn computational logic of the second-type operator. This is because the computational logic of the first-type operator is represented by a group of second-type operators in this operation process. Specifically, the first-type operator includes a boundary identifier. For any first-type operator, computational logic of the first-type operator is represented by a group of second-type operators. A range of a second-type operator included in any first-type operator is indicated by a boundary identifier in the any first-type operator. A range of a second-type operator included in the first-type operator in this solution is a second-type operator included in the computational logic of the first-type operator. For example, it is assumed that the operation process includes one first-type operator and three second-type operators. It is assumed that the first-type operator is an operator A, and the three second-type operators are an operator B, an operator C, and an operator D. Computational logic of the operator A is represented by the operator B and the operator C. In this case, a range of a second-type operator included in the operator A refers to the operator B and the operator C, but does not include the operator D. The first-type operator and the second-type operator mentioned above each may be regarded as a function that can implement a specific function. In this solution, the computational logic of the first-type operator and the computational logic of the second-type operator may be understood as function expressions. In this solution, the operation process of the neural network model may include computational logic of the at least one first-type operator, the computational logic of the first-type operator is represented by a group of second-type operators, and the computational logic of the second-type operator may be implemented by using a kernel function kernel corresponding to a name of the second-type operator.

The deep learning framework obtains a first computation graph of the neural network model based on the operation process. In the deep learning framework, a mathematical computation process is first converted into a computation graph through compilation. The deep learning framework may perform compilation on the foregoing operation process to obtain the first computation graph.

It can be learned from the first aspect that, an operation process of a neural network is represented by two different types of operators, and the computational logic of the first-type operator may be represented by a group of second-type operators. Because the deep learning framework can learn the computational logic of the first-type operator, the computational logic of the first-type operator is no longer unknowable to the deep learning framework. Therefore, there are more opportunities for optimizing the computation graph, and the deep learning framework can better optimize the computation graph.

Optionally, with reference to the first aspect, in a first possible implementation, the first computation graph may include a main graph and a subgraph, and the determining the first computation graph of the neural network model based on the operation process may include: determining the main graph and the subgraph of the neural network model based on the operation process, where the first-type operator in the main graph is indicated by the boundary identifier, the second-type operator in the main graph is indicated by a name of the second-type operator, the main graph is used to output a result of the operation process, the subgraph may include a name of the second-type operator that may be included in the any first-type operator, the subgraph is used to output a result of a first-type operator, and one subgraph represents computational logic of one first-type operator. It can be learned from the first possible implementation of the first aspect that, a specific structure of the first computation graph is provided, thereby improving diversity of solutions.

Optionally, with reference to the first aspect or the first possible implementation of the first aspect, in a second possible implementation, the method may further include: performing optimization processing on the first computation graph by using the first-type operator as a processing granularity, to obtain a second computation graph. In this solution, the performing optimization processing on the first computation graph by using the first-type operator as a processing granularity means that: Some graph optimization processing may be performed inside the first-type operator or between first-type operators. For example, it is assumed that the first computation graph includes first-type operators OP1, OP4, and OP6, and the performing optimization processing on the first computation graph by using the first-type operator as a processing granularity means that: Optimization processing may be performed on any one of a subgraph corresponding to OP1, a subgraph corresponding to OP4, and a subgraph corresponding to OP6; or optimization processing may be performed on any two of the subgraph corresponding to OP1, the subgraph corresponding to OP4, and the subgraph corresponding to OP6; or optimization processing may be performed on all of the subgraph corresponding to OP1, the subgraph corresponding to OP4, and the subgraph corresponding to OP6. It can be learned from the second possible manner of the first aspect that, the first-type operator is used as a processing granularity, to ensure that a boundary of the first-type operator is not broken, that is, to ensure that the first-type operator can be used as a whole for processing, without causing a problem that search space is excessively large and further causing a problem that a compilation time is uncontrollable.

Optionally, with reference to the second possible implementation of the first aspect, in a third possible implementation, the first-type operator may include a third operator and a fourth operator, and the third operator and the fourth operator may include same computational logic. The performing optimization processing on the first computation graph by using the first-type operator as a processing granularity may include: fusing a subgraph corresponding to the third operator and a subgraph corresponding to the fourth operator, to obtain a fused subgraph, where the second computation graph may include the fused subgraph. It can be learned from the third possible implementation of the first aspect that, a specific graph optimization manner is provided. Because the deep learning framework can learn the computational logic of the first-type operator, there are more opportunities for optimizing the computation graph, and the deep learning framework can better optimize the computation graph. Specifically, the deep learning framework may fuse subgraphs corresponding to operators with same computational logic.

Optionally, with reference to the second possible implementation of the first aspect or the third possible implementation of the first aspect, in a fourth possible implementation, the first-type operator may include a fifth operator and a sixth operator, and an intermediate computation result of the fifth operator is the same as an intermediate computation result of the sixth operator. The performing optimization processing on the first computation graph by using the first-type operator as a processing granularity may include: using the intermediate computation result of the fifth operator as an input parameter of the sixth operator. The intermediate computation result is an output result of a second-type operator included in the first-type operator. For example, it is assumed that the fifth operator and the sixth operator each include the operator C, there are two inputs of the operator C: an output of the operator A and an output of the operator B, an input of the operator A is x, and an input of the operator B is y. Because inputs of the operators C in the fifth operator and the sixth operator are the same, output results of the operators C in the fifth operator and the sixth operator are also the same necessarily. Therefore, the output of the operator C in the fifth operator may be directly used as an input parameter of the sixth operator, and the output of the operator C in the sixth operator does not need to be computed. It can be learned from the fourth possible implementation of the first aspect that, a specific graph optimization manner is provided. Because the deep learning framework can learn the computational logic of the first-type operator, there are more opportunities for optimizing the computation graph, and the deep learning framework can better optimize the computation graph. Specifically, when intermediate computation results of two operators are the same, an intermediate result of one of the operators may be used as an input parameter of the other operator.

Optionally, with reference to the fourth possible implementation of the first aspect or a fifth possible implementation of the first aspect, in the fifth possible implementation, the third operator is a forward operator, and the fourth operator is a backpropagation operator corresponding to the third operator; or the fourth operator is a forward operator, and the third operator is a backpropagation operator corresponding to the fourth operator. The forward operator is an operator used in a forward propagation process in a neural network. Forward propagation, also referred to as forward propagation, refers to the following process: Processing is performed on an input feature vector in the neural network by performing computation step by step based on a low-level feature, to obtain an abstract high-level feature; and finally a loss is obtained by using a cost function. For most forward operators, there are backpropagation operators corresponding to the forward operators. A backpropagation operator is an operator used in a backward propagation process in the neural network. A parameter at each layer in the neural network can be trained through back propagation, so that an extremely small error is caused. It can be learned from the fifth possible implementation of the first aspect that, a specific optimization scenario is provided. A backpropagation operator can usually be understood as a derivative of a forward operator plus some operations, and derivatives of many operators and the operators have a large quantity of repeated computational logic in the deep learning field. According to this solution, a forward operator and a backpropagation operator included in the computation graph can be better optimized.

Optionally, with reference to the first aspect or the first to the fifth possible implementations of the first aspect, in a sixth possible implementation, the method may further include: determining a second intermediate representation IR of the first-type operator based on a first IR of the second-type operator and the computational logic of the first-type operator; and determining, based on the second IR, a kernel function kernel corresponding to the first-type operator.

Optionally, with reference to the first aspect or the first to the sixth possible implementations of the first aspect, in a seventh possible implementation, an input of the operation process is tensor data. In this solution, a tensor is a description of a feature of stored data. For example, the tensor may record information such as a shape and a type of the data. A type of the neural network model is not limited in the solution provided in this application. For example, the neural network model may be a neural network model for image processing, a neural network model for speech recognition, or a neural network model for video processing. For different neural network models, input data of the neural network models is usually different. For example, for the neural network model for speech recognition, input data may be pure speech and noise. For another example, for the neural network model for image processing, input data may be image data. In this solution, the tensor data may be used to describe input data of different neural network models. It should be noted that, the solution provided in this application may be applicable to any scenario related to neural network model processing. For example, the scenario includes but is not limited to the following scenarios: speech recognition, computer vision (computer vision, CV), video processing, image recognition, and natural language processing (nature language process, NLP).

A second aspect of this application provides a neural network model processing apparatus. The apparatus may include a programming interface module and a computation graph processing module. The programming interface module is configured to obtain an operation process of a neural network model, where the operation process is represented by at least one first-type operator and a plurality of second-type operators; in the operation process, the first-type operator may include a boundary identifier; computational logic of the first-type operator is represented by a group of second-type operators; and for any first-type operator, a range of a second-type operator that may be included in the any first-type operator is indicated by a boundary identifier in the any first-type operator. The computation graph processing module is configured to obtain a first computation graph of the neural network model based on the operation process obtained by the programming interface module.

Optionally, with reference to the second aspect, in a first possible implementation, the first computation graph may include a main graph and a subgraph. The computation graph processing module is specifically configured to determine the main graph and the subgraph of the neural network model based on the operation process, where the first-type operator in the main graph is indicated by the boundary identifier, the second-type operator in the main graph is indicated by a name of the second-type operator, the main graph is used to output a result of the operation process, the subgraph may include a name of the second-type operator that may be included in the any first-type operator, the subgraph is used to output a result of a first-type operator, and one subgraph represents computational logic of one first-type operator.

Optionally, with reference to the second aspect or the first possible implementation of the second aspect, in a second possible implementation, the computation graph processing module is further configured to perform optimization processing on the first computation graph by using the first-type operator as a processing granularity, to obtain a second computation graph.

Optionally, with reference to the second possible implementation of the second aspect, in a third possible implementation, the first-type operator may include a third operator and a fourth operator, and the third operator and the fourth operator may include same computational logic. The computation graph processing module is specifically configured to fuse a subgraph corresponding to the third operator and a subgraph corresponding to the fourth operator, to obtain a fused subgraph, where the second computation graph may include the fused subgraph.

Optionally, with reference to the second possible implementation of the second aspect or the third possible implementation of the second aspect, in a fourth possible implementation, the first-type operator may include a fifth operator and a sixth operator, and an intermediate computation result of the fifth operator is the same as an intermediate computation result of the sixth operator. The computation graph processing module is specifically configured to use the intermediate computation result of the fifth operator as an input parameter of the sixth operator.

Optionally, with reference to the fourth possible implementation of the second aspect or a fifth possible implementation of the second aspect, in the fifth possible implementation, the third operator is a forward operator, and the fourth operator is a backpropagation operator corresponding to the third operator; or the fourth operator is a forward operator, and the third operator is a backpropagation operator corresponding to the fourth operator.

Optionally, with reference to the second aspect or the first to the fifth possible implementations of the second aspect, in a sixth possible implementation, the apparatus may further include an operator compilation module and a kernel module. The operator compilation module is configured to determine a second intermediate representation IR of the first-type operator based on a first IR of the second-type operator and the computational logic of the first-type operator. The kernel module is configured to determine, based on the second IR determined by the operator compilation module, a kernel function kernel corresponding to the first-type operator.

Optionally, with reference to the second aspect or the first to the sixth possible implementations of the second aspect, in a seventh possible implementation, an input of the operation process is tensor data. In this solution, a tensor is a description of a feature of stored data. For example, the tensor may record information such as a shape and a type of the data. A type of the neural network model is not limited in the solution provided in this application. For example, the neural network model may be a neural network model for image processing, a neural network model for speech recognition, or a neural network model for video processing. For different neural network models, input data of the neural network models is usually different. For example, for the neural network model for speech recognition, input data may be pure speech and noise. For another example, for the neural network model for image processing, input data may be image data. In this solution, the tensor data may be used to describe input data of different neural network models. It should be noted that, the solution provided in this application may be applicable to any scenario related to neural network model processing. For example, the scenario includes but is not limited to the following scenarios: speech recognition, image recognition, CV, and NLP.

A third aspect of this application provides a neural network model processing apparatus. The apparatus may include a memory, configured to store computer-readable instructions. The apparatus may further include a processor coupled to the memory, and the processor is configured to execute the computer-readable instructions in the memory to perform the method described in any one of the first aspect or the possible implementations of the first aspect.

A fourth aspect of this application provides a computer-readable storage medium. When instructions are run on a computer apparatus, the computer apparatus is enabled to perform the method described in any one of the first aspect or the possible implementations of the first aspect.

A fifth aspect of this application provides a computer program product. When the computer program product runs on a computer, the computer is enabled to perform the method described in any one of the first aspect or the possible implementations of the first aspect.

A sixth aspect of this application provides a chip system. The chip system may include a processor, configured to support a terminal device in implementing a function in the method described in any one of the first aspect or the possible implementations of the first aspect.

Optionally, with reference to the sixth aspect, in a first possible implementation, the chip system may further include a memory, and the memory is configured to store program instructions and data that are necessary for the terminal device. The chip system may include a chip, or may include a chip and another discrete component. The chip system may include an application-specific integrated circuit (application-specific integrated circuit, ASIC), a field programmable gate array (field programmable gate array, FPGA), another programmable logic device, or the like. Further, the chip system may include an interface circuit and the like.

It should be noted that, for understanding beneficial effects brought by the implementations of the second aspect to the sixth aspect of this application, refer to the implementations of the first aspect. Therefore, details are not described again.

According to the technical solutions provided in this application, an operation process of a neural network is represented by two different types of operators, and the computational logic of the first-type operator may be represented by a group of second-type operators. Because the deep learning framework can learn the computational logic of the first-type operator, the computational logic of the first-type operator is no longer unknowable to the deep learning framework. Therefore, there are more opportunities for optimizing the computation graph, and the deep learning framework can better optimize the computation graph.

## BRIEF DESCRIPTION OF DRAWINGS

FIG. 1 is a schematic diagram of a deep learning framework according to an embodiment of this application;
FIG. 2 is a schematic diagram of an operator registration process according to an embodiment of this application;
FIG. 3 is a schematic diagram of a neural network model processing method according to an embodiment of this application;
FIG. 4 is a schematic diagram of a first-type operator with a boundary identifier according to an embodiment of this application;
FIG. 5 is a schematic diagram of a first computation graph according to an embodiment of this application;
FIG. 6 shows another neural network model processing method according to an embodiment of this application;
FIG. 7 is a schematic diagram in which a first computation graph includes boundary identifiers according to an embodiment of this application;
FIG. 8 is a schematic diagram in which a first computation graph does not include a boundary identifier;
FIG. 9 is a schematic diagram of another neural network model processing method according to an embodiment of this application;
FIG. 10 is a schematic diagram of another neural network model processing method according to an embodiment of this application;
FIG. 11 is a schematic diagram of a process for generating a kernel file according to an embodiment of this application;
FIG. 12 is a schematic diagram of a process for generating a kernel file according to an embodiment of this application;
FIG. 13 is a schematic diagram of a structure of a computer device according to an embodiment of this application; and
FIG. 14 is a schematic diagram of a structure of an execution device according to an embodiment of this application.

## DESCRIPTION OF EMBODIMENTS

The following describes technical solutions in embodiments of this application with reference to the accompanying drawings in embodiments of this application. It should be understood that, the terms "include" and "comprise" used in this specification and claims of this application indicate the existence of the described feature, entity, step, operation, element and/or component, but do not exclude the existence or addition of one or more other features, entities, steps, operations, elements, components and/or a combination thereof. It should also be understood that, the terms used in this specification of this application are merely intended to describe specific embodiments, but are not intended to limit this application.

To better understand the technical solutions described in this application, the following explains key technical terms in embodiments of this application.

Because embodiments of this application relate to a large quantity of applications of a neural network, for ease of understanding, the following first describes related terms and related concepts such as neural network in embodiments of this application.

(1) Neural network

The neural network may include neural units. The neural unit may be an operation unit with $x_s$ and an intercept 1 as an input. An output of the operation unit may be shown by using the following formula:

$$h_{w,b}(x) = f(W^T x) = f\left(\sum_{s=1}^{n} W_S x_s + b\right)$$

s=1, 2, ..., and n, n is a natural number greater than 1, $W_S$ is a weight of $x_s$, and $b$ is a bias of the neural unit. $f$ is an activation function (activation function) of the neural unit, and is used to introduce a nonlinear characteristic into the neural network to convert an input signal in the neural unit into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

There are a plurality of types of neural networks. For example, a deep neural network (deep neural network, DNN) is also referred to as a multi-layer neural network, that is, a neural network with a plurality of hidden layers. For another example, a convolutional neural network (convolutional neural network, CNN) is a deep neural network with a convolutional structure. A specific type of a neural network used is not limited in this application.

(2) Operator

The operator refers to a function that implements a specific function. For example, a reshape operator is used to reinterpret a shape of tensor data. For another example, a transpose operator is used to adjust a dimension order of tensor data. In this application, common functions used to create a deep learning model algorithm are collectively referred to as operators. An operation performed on any function may be regarded as an operator. For example, convolution is a mathematical method for integral transformation. For example, if a function f3 is generated by using two functions f1 and f2, f1, f2, and the convolution result f3 each may be regarded as an operator.

(3) Computation graph

The computation graph is a manner of describing a computation process by using a graph structure. If there is obvious modularity during the computation, and there are obvious temporal and logical dependency relationships between modules, the computation may usually be described by using a directed graph structure. In actual application, a graph structure has two basic elements: a node and a directed edge. In actual application, a neural network is abstracted as a directed graph structure composed of tensor data and an operator. The node is also referred to as an operator. In other words, the directed graph is a directed graph created by using input data, a mathematical operation, and output data. Generally, a neural network model is described by using a computation graph. This is beneficial to global optimization of a computation task of the entire neural network. In addition, a representation manner of the computation graph also facilitates scheduling and parallel execution of computation tasks. In a deep learning framework, a mathematical computation process is first converted into computation graphs through compilation.

(4) Graph optimization

Graph optimization refers to a process of optimizing a computation graph. An objective of graph optimization is to efficiently execute, on a hardware platform, instructions obtained through compilation by using an algorithm. Graph optimization manners may include some optimization manners such as expression optimization performed by adding 0 or multiplying by 0, function inlining, and expression reusing.

(5) Operator kernel function (kernel)

The kernel is a binary program that is corresponding to an operator and that can be executed in hardware. A deep learning framework uses an operator as a specific element for implementing a computation task, and provides, for each operator, a kernel executed on a CPU or an artificial intelligence processor. The deep learning framework schedules and executes, based on a computation graph, a kernel function corresponding to each operator in the computation graph, to complete computation of an entire neural network.

(6) Operator registration

Each operator for a deep learning framework needs to be implemented by using a kernel in corresponding hardware. Therefore, the kernel implemented in the corresponding hardware needs to be registered in the deep learning framework, and a kernel corresponding to an operator in corresponding hardware is invoked based on an operator name during model running.

(7) Forward operator

The forward operator is an operator used in a forward propagation process in a neural network. Forward propagation, also referred to as forward propagation, refers to the following process: Processing is performed on an input feature vector in the neural network by performing computation step by step based on a low-level feature, to obtain an abstract high-level feature; and finally a loss is obtained by using a cost function.

(8) Backpropagation operator

For most forward operators, there are backpropagation operators corresponding to the forward operators. A backpropagation operator is an operator used in a backward propagation process in the neural network. A parameter at each layer in the neural network can be trained through back propagation, so that an extremely small error is caused.

(9) Artificial intelligence processor

The artificial intelligence processor is also referred to as a dedicated processor. In this embodiment of this application, the artificial intelligence processor is a processor for a specific application or field. For example, a graphics processing unit (graphics processing unit, GPU), also referred to as a display core, a visual processing unit, or a display chip, is a dedicated processor that is specially used to perform an image operation on a personal computer, a workstation, a game machine, and some mobile devices (such as a tablet computer or a smartphone). For another example, a neural network processor (neural processing unit, NPU) is a dedicated processor for a matrix multiplication operation in an application in the artificial intelligence field, uses a "data-driven parallel computing" architecture, and is particularly good at processing massive multimedia data of videos, images, and the like.

(10) Deep learning framework

To satisfy growing demands for neural networks, a deep learning framework has emerged. With the deep learning framework, a researcher only needs to focus on a network structure of a deep learning algorithm, and can complete a complex deep learning network task by writing a network structure by writing a simple python (a cross-platform computer programming design language) script, to implement model inference and training in hardware. In other words, the deep learning framework is used to lower a development barrier in the deep learning field, provides a basic computing framework for deep learning, and is used to quickly create a deep learning application. Currently, mainstream deep learning frameworks in the industry include Tensorflow, Torch, Mxnet, Thenao, Caffe, and the like. A convolutional neural network framework Caffe is used as an example. In actual application, Caffe supports a plurality of types of deep learning architectures, image-oriented classification, and image segmentation, and can further support a convolutional neural network (convolutional neural network, CNN), a convolutional neural network (region-CNN, RCNN) used for objective detection, a long short-term memory (long short-term memory, LSTM) neural network, and a fully connected neural network design. The deep learning framework can support a plurality of types of basic operators. Specifically, the plurality of types of basic operators herein may include common neural network operators. For example, the common neural network operators include a convolution/deconvolution operator, a pooling operator, an activation operator, a softmax (softmax) operator, and a fully connected operator. The activation operator may include but is not limited to Relu, Sigmoid, Tanh, and another operator that may be implemented through interpolation.

(11) Black-box operator

For the black-box operator, only an input type, an output type, a dimension, and other information of the operator can be learned by a deep learning framework. The deep learning framework cannot learn internal implementation details of the black-box operator. For example, the deep learning framework cannot learn computational logic of the operator.

(12) White-box operator

For the white-box operator, a deep learning framework can learn an input type, an output type, a dimension, and other information of the operator. In addition, the deep learning framework can further learn internal implementation details of the white-box operator. For example, the deep learning framework can further learn computational logic of the operator. Certainly, the computational logic that is learned is a representation of a computation function of the white-box operator. Computation functions of some operators may be represented in a plurality of manners. The plurality of representation manners are functionally equivalent to each other. That the representation manners are functionally equivalent to each other may be understood as that obtained output results should be equal for a same input.

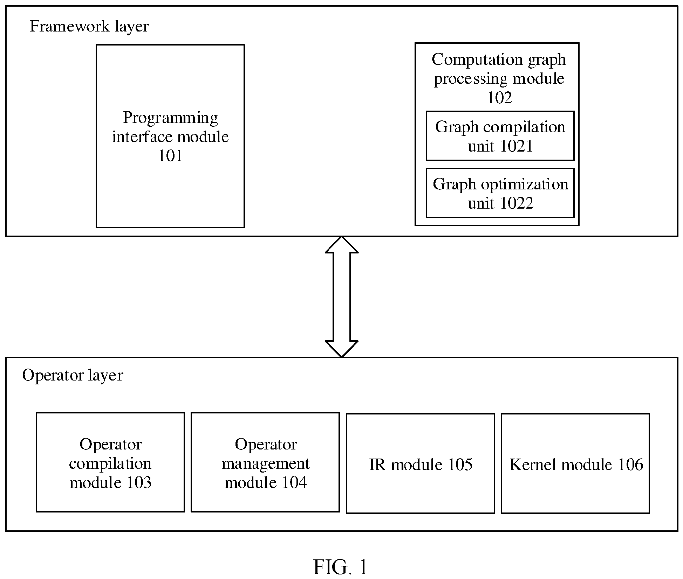

FIG. 1 is a schematic diagram of a deep learning framework according to an embodiment of this application. As shown in FIG. 1, the deep learning framework may include a framework layer and an operator layer, and the framework layer may include a programming interface module 101 and a computation graph processing module 102. The computation graph processing module 102 may further include a graph compilation unit 1021 and a graph optimization unit 1022. The operator layer may further include an operator compilation module 103, an operator management module 104, an intermediate representation (intermediate representation, IR) module 105, and a kernel function (kernel) module 106. The deep learning framework may receive, by using the programming interface module 101, program code input by a user. For example, the program code is an algorithm model designed by the user. It should be noted that, in this application, unless otherwise emphasized, an algorithm, an algorithm model, and a neural network model represent a same meaning. For example, the neural network model may receive input data, and generate a prediction output based on the received input data and a current model parameter. In actual application, the neural network model may be a regression model, a deep neural network (deep neural network, DNN), a convolutional neural network (convolutional neural network, CNN) model, a recurrent neural network (recurrent neural network, RNN) model, or the like. This is not specifically limited in this embodiment of this application. For example, in a Caffe framework, a neural network model has a hierarchical structure, and an operator may be a corresponding layer (layer) in the neural network model. The user may design, based on a requirement, a connection relationship between operators by using the programming interface module 101. For example, a neural network model for face recognition includes a plurality of different types of operators (a convolution operator, a pooling operator, and a fully connected operator), and a connection relationship between the operators may be: convolution operator 1-pooling operator 1-convolution operator 2-pooling operator 2-fully connected operator 1-fully connected operator 2. For another example, a neural network model for license plate character recognition includes a plurality of different types of operators (a convolution operator, a pooling operator, an activation operator, a softmax operator, and the like), and a connection relationship between the operators may be: convolution operator 1-activation function Relu-maximum pooling operator 1-convolution operator 2-activation function Relu-maximum pooling operator 2-convolution operator 3-activation function Relu-maximum pooling operator 3-convolution operator 4-activation function-maximum pooling operator 4-convolution operator 5-activation function-maximum pooling operator 5-fully connected operator 1-softmax operator-output operator. In other words, the user may describe computational logic of an algorithm model by invoking the programming interface module 101. A program obtained by the programming interface module 101 may be compiled by using the graph compilation unit 1021, and an algorithm model obtained after the compilation is converted into a computation graph.

The graph optimization unit 1022 may perform graph optimization on the computation graph obtained by the graph compilation unit 1021, to obtain an optimized computation graph. The deep learning framework compiles the optimized computation graph by using the operator layer, to generate a kernel file. Specifically, the deep learning framework queries, based on a name of an operator by using the operator compilation module 103, the operator management module 104 for an IR function pointer corresponding to the operator; after finding, based on the name of the operator, the IR function pointer corresponding to the operator, the operator management module 104 sends the IR function pointer to the operator compilation module 103; and the operator compilation module 103 queries, based on the obtained IR function pointer, the IR module for an IR corresponding to the operator. The IR module prestores an IR of a related operator. IR is a professional term in the editor field. A bridge is required between a large quantity of different programming languages and an increasing quantity of hardware architectures. The IR serves as a bridge, so that when a new programming language or a new device platform needs to be supported, only a corresponding front end and a corresponding back end need to be developed.

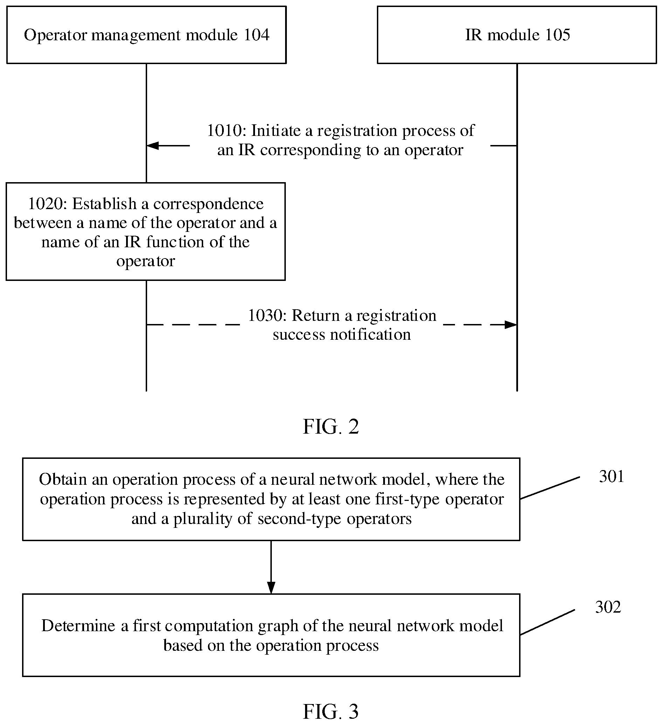

It should be noted that, the operator compilation module 103 may obtain, based on the name of the operator, the IR corresponding to the operator because a correspondence between a name of an operator and a name of an IR function corresponding to the operator is established in advance. In other words, the IR corresponding to the operator is registered with the deep learning framework according to a registration mechanism provided by the deep learning framework. The following describes a registration process with reference to FIG. 2. FIG. 2 is a schematic diagram of an operator registration process according to an embodiment of this application. In the registration process, the IR module 105 registers with the deep learning framework by using a name of an IR function corresponding to the operator. Specifically, the following steps may be included.

1010: The IR module 105 initiates, to the operator management module 104, a registration process of an IR corresponding to an operator.

The IR module 105 may send a name of an IR function corresponding to the operator to the operator management module 104.

1020: The operator management module 104 establishes a correspondence between a name of the operator and the name of the IR function corresponding to the operator.

After receiving the registration process sent by the IR module 105, the operator management module 104 may create a mapping graph (map). A mapping key (key) of the map is corresponding to the name of the operator, and a mapping value (value) is corresponding to the name of the IR function corresponding to the operator. In this case, during compilation, the operator compilation module 103 may find, in the operator management module 104 based on the name of the operator, the name of the IR function corresponding to the operator, further load an IR function pointer, and obtain, based on the loaded IR function pointer, the IR corresponding to the operator.

In a specific implementation, the registration process may further include the following step: 1030: The operator management module 104 returns a registration success notification to the IR module 105.

For ease of better understanding of this application, the following specifically describes a research idea of the technical solution described in this application.

There is usually a huge computation amount in a deep learning algorithm (in this application, the deep learning algorithm is also referred to as a deep learning model sometimes, and the deep learning algorithm and the deep learning model have a same meaning when a difference between the deep learning algorithm and the deep learning model is not emphasized), and it usually takes several hours or even several days to complete algorithm-based training. Therefore, improving the computational efficiency of deep learning has become a focus of each deep learning framework, and optimization of a computation graph has become a most important task. A programmer uses a programming interface to describe computational logic of the deep learning algorithm. Then, a deep learning framework compiles the deep learning algorithm to convert the deep learning algorithm into a computation graph, and optimizes and compiles the computation graph to generate an executable kernel program. The kernel program is used to link, based on an optimized computation graph, kernels corresponding to a plurality of operators included in the computation graph. Specifically, there is an obvious logical dependency relationship between operators in the computation graph. The dependency relationship may be described by using a directed graph structure, and kernels corresponding to the operators may be linked based on the dependency relationship. The kernel program may be executed on a hardware platform. In an execution process, the kernels corresponding to the operators may be executed sequentially according to a link order of the operators in the kernel program. It should be noted that, in an existing process of optimizing a computation graph, usually, only some basic optimization operations can be performed on the computation graph. For example, the optimization operations include expression optimization performed by adding 0 or multiplying by 0. As a result, there are few opportunities for optimizing a computation graph, and a kernel program obtained by compiling an optimized computation graph by using an existing optimization solution cannot satisfy an expected objective of efficient execution of the kernel program on a hardware platform.

Specifically, when compiling the computation graph, the deep learning framework invokes, based on a name of an operator (which may also be referred to as a name of a computing node) in the computation graph, a kernel corresponding to the name of the operator, to implement a function of the operator. In the foregoing process, the deep learning framework does not perceive internal logic of the operator or implementation details of the operator at all, and the deep learning framework only needs to obtain a result based on input data and the operator. Because computational logic of each operator is unknowable to the deep learning framework, some opportunities for graph optimization are lost. In addition, in the deep learning framework, each time a new type of operator is added, an interface corresponding to this type of operator needs to be declared in the deep learning framework, and then a kernel corresponding to this type of operator needs to be pre-configured in hardware. Finally, the kernel corresponding to this type of operator is registered with the deep learning framework according to a registration mechanism provided by the deep learning framework. This process is complex. When a large quantity of operators need to be added newly to the deep learning framework, this process is more complex. It should be noted that, herein, that a new type of operator is added means: Before this type of operator is successfully registered, in the deep learning framework, there is no kernel corresponding to the operator, and a kernel corresponding to this type of operator cannot be obtained based on a name of the operator. A registration process of a newly added operator is a process of establishing a mapping relationship between a name of the newly added operator and a kernel corresponding to the operator, so that the deep learning framework can obtain, based on the name of the operator, the kernel corresponding to the operator.

Currently, almost all graph optimizations are performed based on black-box operators. A black-box operator is an operator described above whose internal computational logic is unknowable to the deep learning framework. The deep learning framework can perform graph optimization processing only based on a granularity of a black-box operator. If the deep learning framework can be allowed to learn internal computational logic of an operator, the deep learning framework has more opportunities for graph optimization. In addition, an expansion degree of internal computational logic of an operator further needs to be considered. For example, if logic of each operator in a computation graph is fully expanded, the computation graph includes excessive operators. During graph optimization, a problem that compilation duration is uncontrollable may be caused due to an excessively long traversal time. In addition, in a conventional technology, there are approximately thousands of black-box operators, that is, operators whose computational logic is unknowable to the deep learning framework. As mentioned above, when a large quantity of operators are added newly, a registration process is complex, and more kernels need to be pre-configured.

Based on the foregoing analysis and description, an embodiment of this application provides a neural network model processing method. A group of second-type operators are used to represent computational logic of a first-type operator. In this way, a deep learning framework can learn internal logic of the first-type operator, thereby resolving a problem that an opportunity for graph optimization is lost when graph optimization is performed by using a black-box operator. This is described below by using an example. Assuming that a computation graph is regarded as an article, an operator in a computation graph in a conventional technology is equivalent to a word in an article, and each letter in the word represents computational logic of the operator. In the conventional technology, a deep learning framework does not perceive each letter in a word, in other words, the deep learning framework does not perceive computational logic of an operator. By contrast, in the solution provided in this application, a computation graph includes two types of operators, where the first-type operator may be equivalent to a word in an article, and the second-type operators may be equivalent to a plurality of letters forming the word. According to the solution provided in this application, the deep learning framework can perceive each letter in a word, in other words, the deep learning framework can obtain the computational logic of the first-type operator. In this way, the computation graph includes internal logic of more operators, so that there are more opportunities for optimizing the computation graph.

In addition, in this application, some commonly used operators for deep learning may be selected as second-type operators based on a statistical result. In this application, only kernels corresponding to these commonly used operators are pre-configured. Most of other operators may be obtained by combining these operators. For example, the selected commonly used operators for deep learning may be an addition operator (add), a subtraction operator (sub), a multiplication operator (mul), an exponential operator (exp), and a square root operator (sqrt) of a nonnegative real number. Kernels corresponding to these selected commonly used operators are registered with the deep learning framework according to a registration mechanism provided by the deep learning framework. The foregoing word example is used for description. For example, 26 English letters may be selected as second-type operators, another word may be obtained by combining the 26 English letters, and the another word may be regarded as a first-type operator. In other words, computational logic of the first-type operator may be represented by using the second-type operators. In this manner of obtaining a new operator by combining the commonly used operators, a registration process of the newly added operator is not additionally required. This resolves the problem mentioned above that a registration process is complex and more kernels need to be pre-configured when a large quantity of operators are added newly.

In addition, in the solution provided in this application, the computation graph is optimized by using the first-type operator as a processing granularity. By optimizing the computation graph by using the first-type operator as a processing unit, the problem that compilation duration may be uncontrollable due to an excessively long traversal time during graph optimization after logic of the operator is expanded is further resolved.

Based on the foregoing research idea, the following specifically describes the technical solution provided in this application.

FIG. 3 is a schematic diagram of a neural network model processing method according to an embodiment of this application.

As shown in FIG. 3, the neural network model processing method provided in this embodiment of this application may include the following steps:

301: Obtain an operation process of a neural network model, where the operation process is represented by at least one first-type operator and a plurality of second-type operators.

The operation process is represented by the at least one first-type operator and the plurality of second-type operators. In the operation process, the first-type operator includes a boundary identifier. Computational logic of the first-type operator is represented by a group of second-type operators. For any first-type operator, a range of a second-type operator included in the any first-type operator is indicated by a boundary identifier in the any first-type operator. The operation process in this application includes the computational logic in this application.

Specifically, the operation process of the neural network model mentioned in this application is a process in which a mathematical operation is performed on input data by using at least the first-type operator and the plurality of second-type operators to obtain output data of the neural network model. The operation process may refer to computational logic between a plurality of first-type operators and a plurality of second-type operators. For example, the operation process may include computational logic between first-type operators, computational logic between second-type operators, and computational logic between a first-type operator and a second-type operator.

A range of a second-type operator included in the first-type operator in this solution is a second-type operator included in the computational logic of the first-type operator. For example, it is assumed that the operation process includes one first-type operator: an operator A; and three second-type operators: an operator B, an operator C, and an operator D. Computational logic of the operator A is represented by the operator B and the operator C. In this case, a range of a second-type operator included in the operator A refers to the operator B and the operator C, but does not include the operator D. The first-type operator and the second-type operator mentioned above each may be regarded as a function that can implement a specific function. In this solution, the computational logic of the first-type operator and computational logic of the second-type operator may be understood as function expressions.

In the implementation provided in this application, the internal computational logic of the first-type operator is knowable to a deep learning framework, but internal computational logic of the second-type operator is unknowable to the deep learning framework. The second-type operators may be some basic operators provided by the deep learning framework. The basic operators herein may be some commonly used operators for deep learning. Basically, most operators may be obtained by combining these basic operators. For example, the basic operators may include an addition operator (add), a subtraction operator (sub), a multiplication operator (mul), an exponential operator (exp), and a square root operator (sqrt) of a nonnegative real number. It should be noted that, the several basic operators enumerated above are merely used as examples for description, and do not represent any limitation on a type of the second-type operator. In actual application, an appropriate basic operator may be selected based on an actual requirement. For example, the basic operators may further include a maximum value operator (maximum) and an operator (reshape) for readjusting a row quantity, a column quantity, and a dimension quantity of a matrix.

In a conventional technology, there are approximately thousands of black-box operators, that is, operators whose computational logic is unknowable to a deep learning framework. The deep learning framework needs to provide, for each black-box operator, a kernel executed on a CPU or an artificial intelligence processor. To make an operator correspond to a kernel, the kernel corresponding to the operator needs to be registered with the deep learning framework by using a registration mechanism provided by the deep learning framework. A specific registration process has been described above in this application, and details are not described herein again. In this application, thousands of black-box operators are not required, but only a few basic operators are required. By combining these basic operators (in this application, the basic operator is also referred to as a basic black-box operator sometimes, and the basic operator and the basic black-box operator have a same meaning when a difference between the basic operator and the basic black-box operator is not emphasized), computational logic of some other more complex operators can be represented. Therefore, in the technical solution provided in this application, there is only a need to make kernels corresponding to these basics operators be registered with the deep learning framework according to a registration mechanism provided by the deep learning framework. The basic operator herein is the second-type operator mentioned in this embodiment of this application.

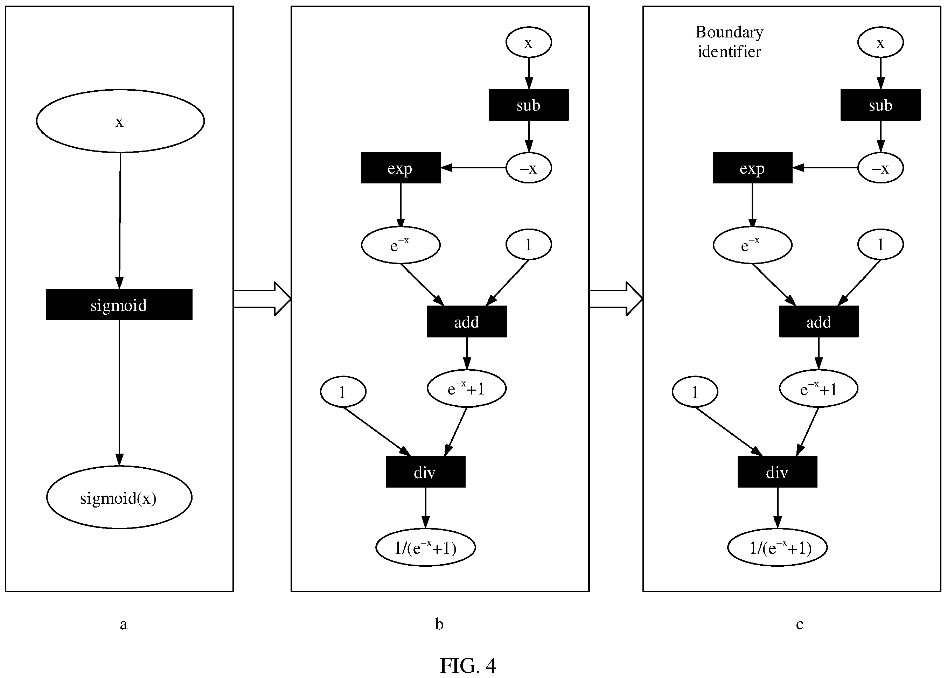

The following first provides a description with reference to a specific example. As shown in FIG. 4, a sigmoid operator is used as an example to describe a first-type operator with a boundary identifier provided in this embodiment of this application. In a conventional technology, the sigmoid operator is a black-box operator, and the deep learning framework cannot learn computational logic of the sigmoid operator. As shown in a in FIG. 4, the deep learning framework can only learn that input data of the sigmoid operator is x and output data of the sigmoid operator is sigmoid(x), but the deep learning framework does not learn how to obtain, based on the input data x, the output data sigmoid(x), that is, computational logic of sigmoid(x). In the technical solution provided in this application, the computational logic of the sigmoid operator may be represented by using basic operators. As shown in b in FIG. 4, basic operators are a sub operator, an exp operator, an add operator, and a div operator, and kernels are pre-configured for these operators. The computational logic of the sigmoid(x) operator may be represented by using these basic operators. Specifically, the computational logic of the sigmoid operator is as follows:

$$\mathrm{sigmoid}(\mathrm{x}) = \frac{1}{1 + e^{-x}}$$

As shown in c in FIG. 4, a user may add the boundary identifier to the first-type operator. In this way, in a process of performing graph compilation on the operation process by the deep learning framework, the first-type operator may be regarded as a whole for processing.

After completing the foregoing registration process, the user may define an operator by using a programming interface module of the deep learning framework. Specifically, the deep learning framework provides primitives of basic operators to the user by using the programming interface module, and allows the user to freely combine the basic operators to obtain a new operator, that is, combine the second-type operators to obtain the first-type operator. In this manner, the deep learning framework can learn the computational logic of the first-type operator. When inputting the operation process of the neural network model, the user may freely use the first-type operator and the second-type operators. In other words, the finally obtained operation process of the neural network model includes the second-type operator and the second type operators.

The first-type operator includes a boundary identifier. For one first-type operator, a boundary identifier indicates a group of second-type operators, and the group of second-type operators is used to represent computational logic of the first-type operator in which the boundary identifier is located.

302: Determine a first computation graph of the neural network model based on the operation process.

In the deep learning framework, a mathematical computation process is first converted into a computation graph through compilation. In this embodiment of this application, the deep learning framework performs compilation on the operation process mentioned in step 301, to obtain the first computation graph. After the compilation is performed on the neural network model, the computational logic of the neural network model may be regarded as a complex computation graph formed by hundreds or even thousands of operators.

In a specific implementation, each first-type operator includes a boundary identifier. In a compilation process, the boundary identifier of each first-type operator is kept unchanged to obtain the first computation graph.

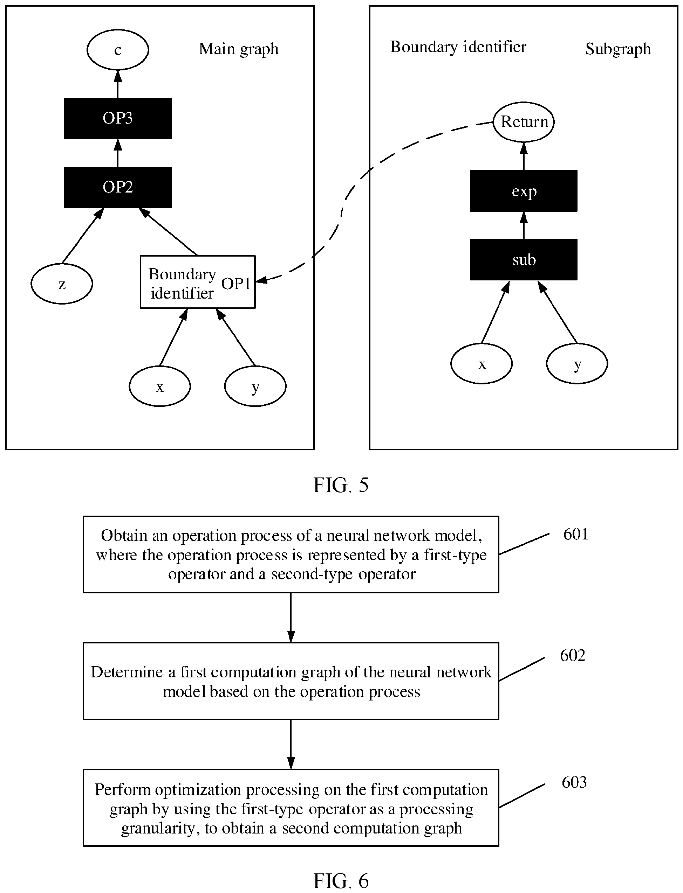

Description is provided below with reference to FIG. 5. FIG. 5 is a schematic diagram of a first computation graph according to an embodiment of this application. As shown in FIG. 5, the first computation graph may include a main graph and a subgraph. The main graph represents an operation process by using a boundary identifier of a first-type operator and a name of a second-type operator. For example, in an example shown in FIG. 5, OP1 represents a first-type operator. Specifically, OP1 includes a boundary identifier used to indicate that OP1 needs to be regarded as a whole during processing performed on the main graph. OP2 and OP3 represent second-type operators. Specifically, OP2 and OP3 are names of the operators. A computation process corresponding to the main graph is as follows: OP1 has two inputs, namely, data x and data y; OP2 has two inputs, namely, data z and an output of OP1; and OP3 has one input, the input of OP3 is an output of OP2, and an output of OP3 is an output result of the main graph.

The subgraph is used to represent computational logic of the first-type operator. For example, in the example shown in FIG. 5, computational logic corresponding to the subgraph is as follows: A sub operator includes two inputs, namely, data x and data y; an output of the sub operator is an input of an exp operator; and an output result of the exp operator is an output result of OP1. The sub operator and the exp operator are second-type operators, that is, preselected commonly used operators. The subgraph carries a boundary identifier. In a specific implementation, the boundary identifier may be scope. scope may represent a set formed by all other second-type operators associated with the computational logic of the first-type operator. It should be noted that, types of boundary identifiers included in first-type operators may be the same or may be different. In this embodiment of this application, the boundary identifier included in the first-type operator is only used to indicate that the first-type operator needs to be regarded as a whole for processing during processing performed on the first computation graph.

As shown in FIG. 5, the main graph includes the first-type operator OP1. Specifically, the main graph includes a boundary identifier and second-type operators OP2 and OP3. Specifically, the main graph includes names of OP2 and OP3. x, y, and z each represent input data, and c represents output data. The deep learning framework cannot learn computational logic of OP2 and OP3, but can obtain the computational logic of OP1 by using the subgraph. The subgraph shown in FIG. 5 shows the computational logic of OP1. OP1 is formed by combining basic operators, in other words, OP1 is formed by combining second-type operators. For example, as shown in FIG. 5, OP1 is formed by the sub operator and the exp operator. After an execution result that is of OP1 and that is corresponding to the subgraph is obtained, the obtained result corresponding to the subgraph is returned to the main graph.

It can be learned from the embodiment corresponding to FIG. 5 that, an operation process of a neural network is represented by two different types of operators, the computational logic of the first-type operator is represented by the second-type operators, and corresponding kernels are pre-configured for the second-type operators. In the technical solution provided in this application, the first-type operator may be obtained by combining basic second-type operators. On a premise that a registration process is not additionally required, the deep learning framework can learn the computational logic of the first-type operator. In this way, there are more opportunities for optimizing the computation graph.

It should be understood that, when the deep learning framework can learn computational logic of an operator, opportunities for graph optimization are greatly increased. The solution provided in this application may be used in various graph optimization scenarios. For example, how to perform graph optimization based on the computation graph obtained in FIG. 3 is described below. It should be noted that, in addition to the several scenarios mentioned in this application, the graph optimization scenarios may certainly include other application scenarios. Other solutions for performing graph optimization by using the computation graph obtained in the solution provided in this application should also fall within the protection scope of this application.

FIG. 6 shows another neural network model processing method according to an embodiment of this application.

As shown in FIG. 6, the another neural network model processing method provided in this embodiment of this application may include the following steps:

601: Obtain an operation process of a neural network model, where the operation process is represented by a first-type operator and a second-type operator.
602: Determine a first computation graph of the neural network model based on the operation process.

For understanding step 601 and step 602, refer to step 301 and step 302 in the embodiment corresponding to FIG. 3, and details are not described herein again.

603: Perform optimization processing on the first computation graph by using the first-type operator as a processing granularity, to obtain a second computation graph.

In the solution provided in this application, during optimization processing performed on the computation graph, the first-type operator is used as a processing granularity, in other words, the first-type operator is regarded as a whole for processing. Specifically, there may be a plurality of implementations of using the first-type operator as a processing granularity. For example, in one manner, a programmer may annotate the first-type operator when inputting the operation process of the neural network model, and add boundary information for the first-type operator based on the annotation during generating of the first computation graph of the neural network model based on the operation process. For example, the boundary information is scope described in the embodiment corresponding to FIG. 3, and scope may be added to the first-type operator based on the annotation during generating of the first computation graph of the neural network model based on the operation process.

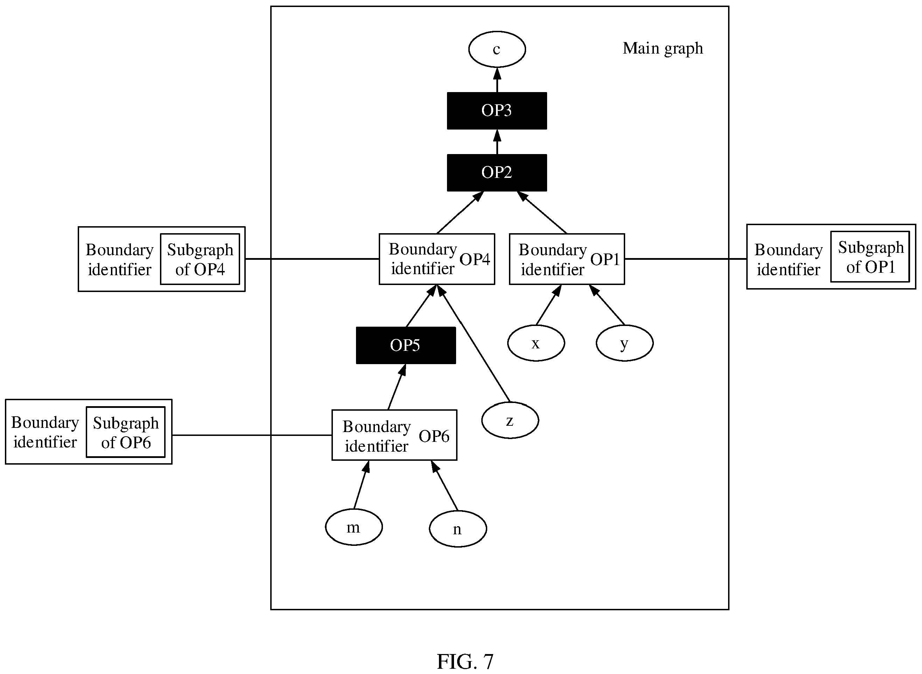

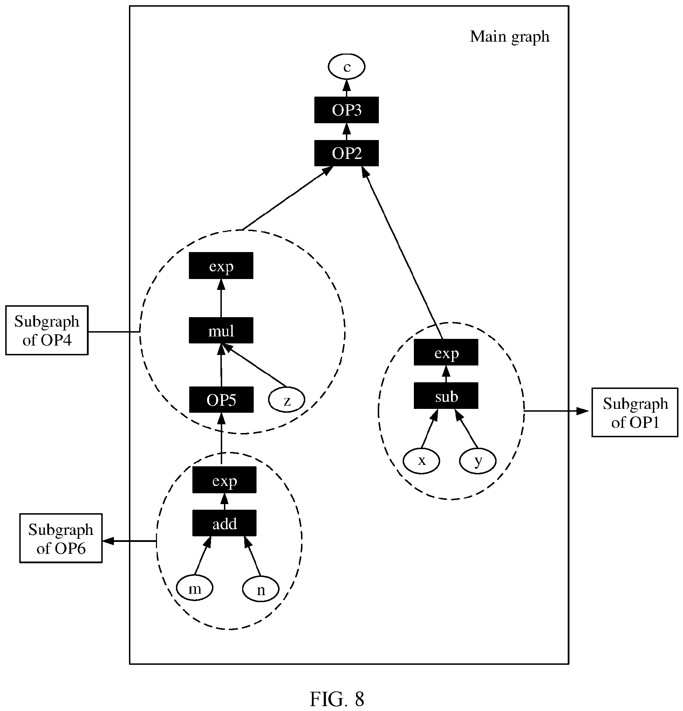

In this embodiment of this application, the first-type operator is used as a processing granularity, to ensure that a boundary of the first-type operator is not broken, that is, to ensure that the first-type operator can be used as a whole for processing. If the boundary of the first-type operator is broken, all operators included in the first computation graph may be fused into one graph. This may result in a problem that search space is excessively large during various subsequent graph optimization processing operations. With reference to FIG. 7 and FIG. 8, the following provides descriptions by using examples. A first computation graph shown in FIG. 7 includes a main graph and a subgraph. All first-type operators in the main graph include boundary identifiers. For example, OP1, OP4, and OP6 represent first-type operators, and OP1, OP4 and OP6 all include boundary identifiers. A subgraph corresponding to OP1 further describes computational logic of OP1, a subgraph corresponding to OP4 further describes computational logic of OP1, and a subgraph corresponding to OP6 further describes computational logic of OP6 (specific internal logic is not shown in the figure). The main graph further includes second-type operators, for example, OP2, OP3, and OP5. x, y, z, m, and n all represent input data. In this embodiment of this application, the first-type operator is used as a processing granularity. In a scenario shown in FIG. 7, optimization may be performed on any one of a subgraph corresponding to OP1, a subgraph corresponding to OP4, and a subgraph corresponding to OP6; or optimization may be performed on any two of the subgraph corresponding to OP1, the subgraph corresponding to OP4, and the subgraph corresponding to OP6; or optimization may be performed on all of the subgraph corresponding to OP1, the subgraph corresponding to OP4, and the subgraph corresponding to OP6. In other words, the first-type operator is used as a processing granularity, that is, the first-type operator includes a boundary identifier, and some graph optimization processing may be performed inside the first-type operator or between first-type operators. This does not cause a problem that search space is excessively large and further avoids a problem that a compilation time is uncontrollable.

FIG. 8 is a schematic diagram in which a first computation graph does not include a boundary identifier. Compared with FIG. 7, that is, a schematic diagram in which the first computation graph includes the boundary identifiers, in the first computation graph shown in FIG. 8, boundaries of first-type operators, for example, OP1, OP4, and OP6, are broken. In other words, none of OP1, OP4, and OP6 includes a boundary identifier. As a result, the first computation graph includes a quite large quantity of operators. For example, as shown in FIG. 8, the first computation graph includes a plurality of exp operators, an add operator, a mul operator, and a sub operator. As a result, an operator granularity is excessively fine, and search space is excessively large in a subsequent graph optimization process, leading to a problem that a compilation time is excessively long. By contrast, when the first-type operator is used as a processing granularity, that is, the first-type operator includes a boundary identifier, some graph optimization processing operations may be performed between first-type operators without causing a problem that search space is excessively large.

With reference to several specific optimization solutions, how to perform optimization processing on the first computation graph by using the first-type operator as a processing granularity, to obtain the second computation graph is described below.

In a specific implementation, assuming that the first-type operator includes a third operator and a fourth operator, and the third operator and the fourth operator include same computational logic, the performing optimization processing on the first computation graph by using the first-type operator as a processing granularity may include:
fusing a subgraph corresponding to the third operator and a subgraph corresponding to the fourth operator, to obtain a fused subgraph, where the second computation graph includes the fused subgraph.

The following provides a description with reference to FIG. 7. As shown in FIG. 7, the first-type operators include OP1, OP4, and OP6. Any first-type operator may be regarded as a third operator. Any operator other than the selected third operator in the first computation graph may be regarded as a fourth operator. During optimization processing performed on the first computation graph by using the first-type operator as a processing granularity, if any two or more first-type operators include same computational logic, subgraphs corresponding to the any two or more first-type operators may be fused to obtain a fused subgraph. The fused subgraph may be used to simultaneously return output results corresponding to the two or more first-type operators. It is assumed that OP1 and OP4 include same computational logic, subgraphs corresponding to OP1 and OP4 may be fused to obtain a fused subgraph, and the fused subgraph may be used to simultaneously return output results corresponding to OP1 and OP4. Alternatively, it is assumed that OP1, OP4, and OP6 include same computational logic, subgraphs corresponding to OP1, OP4, and OP6 may be fused to obtain a fused subgraph, and the fused subgraph may be used to simultaneously return output results corresponding to OP1, OP4, and OP6.

The fusing a subgraph corresponding to the third operator and a subgraph corresponding to the fourth operator when it is determined that the third operator and the fourth operator include same computational logic, to obtain a fused subgraph is further described below by using an example in which two first-type operators include same computational logic. It is assumed that computational logic of the third operator and the fourth operator is as follows:

$$\text{sigmoid}(x) = \frac{1}{1 + e^{-x}}$$

$$\text{sigmoid}'(x) = -\frac{1}{\left(1 + e^{-x}\right)^2} \times e^{-x} \times (-1) = \frac{e^{-x}}{(1 + e^{-x})^2}$$

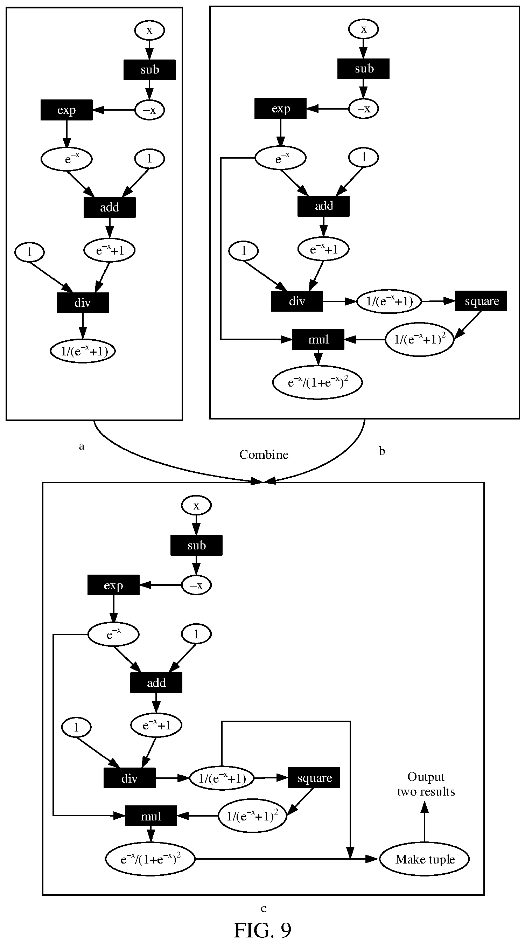

sigmoid(x) may be regarded as the third operator, and sigmoid'(x) may be regarded as the fourth operator; or sigmoid(x) may be regarded as the fourth operator, and sigmoid'(x) may be regarded as the third operator. FIG. 9 is a schematic diagram of another neural network model processing method according to an embodiment of this application. a in FIG. 9 shows a subgraph corresponding to a sigmoid operator, in other words, a in FIG. 9 is used to represent computational logic of the sigmoid operator. An expression of sigmoid(x) has been provided above, and details are not described herein again. b in FIG. 9 shows a subgraph corresponding to a sigmoid'(x) operator, in other words, b in FIG. 9 is used to represent computational logic of the sigmoid'(x) operator. An expression of the sigmoid'(x) operator has been provided above, and details are not described herein again. It can be learned from a in FIG. 9 and b in FIG. 9 that, the computational logic of the sigmoid operator is partially the same as that of the sigmoid'(x) operator. Therefore, the first computation graph may be modified, and the subgraph shown in a in FIG. 9 and the subgraph shown in b in FIG. 9 are fused to obtain a fused subgraph. The fused subgraph is shown by c in FIG. 9. A make tuple operator is used to output two results simultaneously. In other words, the subgraphs corresponding to the two operators are fused into one graph, and output results corresponding to the sigmoid operator and the sigmoid'(x) operator are returned simultaneously.

In a specific implementation, the third operator may be a forward operator, and the fourth operator may be a backpropagation operator corresponding to the third operator; or the fourth operator is a forward operator, and the third operator is a backpropagation operator corresponding to the fourth operator. This is because the forward operator is an operator used in a forward signal propagation process, and for most forward operators, backpropagation operators corresponding to the forward operators are required. In deep learning network training, a backpropagation operator and an error are used to calculate a network error at each layer, and the network error is propagated, to train a parameter at each layer, so that an extremely small error is caused. A backpropagation operator can usually be understood as a derivative of a forward operator plus some operations, and derivatives of many operators and the operators have a large quantity of repeated computational logic in the deep learning field.

In a specific implementation, the first-type operator includes a third operator and a fourth operator, and an intermediate computation result of the third operator is the same as an intermediate computation result of the fourth operator. The performing optimization processing on the first computation graph by using the first-type operator as a processing granularity may include: determining the intermediate computation result of the third operator as an input parameter of the fourth operator. The intermediate computation result is an output result of a second-type operator included in the first-type operator. For example, it is assumed that a fifth operator and a sixth operator each include the operator C, there are two inputs of the operator C: an output of the operator A and an output of the operator B, an input of the operator A is x, and an input of the operator B is y. Because output results of the operators C in the fifth operator and the sixth operator are the same, the output of the operator C in the fifth operator may be directly used as an input parameter of the sixth operator, and the output of the operator C in the sixth operator does not need to be computed.

The following provides a description with reference to FIG. 7. As shown in FIG. 7, the first-type operators include OP1, OP4, and OP6. Any first-type operator may be regarded as a third operator. Any operator other than the selected third operator in the first computation graph may be regarded as a fourth operator. During optimization processing performed on the first computation graph by using the first-type operator as a processing granularity, when it is determined that the intermediate computation result of the third operator is the same as the intermediate computation result of the fourth operator, the intermediate computation result of the third operator is determined as the input parameter of the fourth operator. For example, it is assumed that intermediate computation results of OP1 and OP4 are the same, the intermediate computation result of OP1 may be used as an input parameter of OP4, or the intermediate computation result of OP4 may be used as an input parameter of OP1. In other words, when intermediate computation results of two operators are the same, an intermediate result of one operator may be used for the other operator with no need to perform computation twice. For another example, it is assumed that intermediate computation results of OP1, OP4, and OP6 are the same, the intermediate computation result of OP1 may be used as input parameters of OP4 and OP6, in other words, the intermediate computation result of OP1 may be directly used for OP4 and OP6 with no need to perform computation twice; or the intermediate computation result of OP4 is used as the intermediate computation results of OP1 and OP6, in other words, the intermediate computation result of OP4 may be directly used for OP1 and OP6 with no need to perform computation twice; or the intermediate computation result of OP6 is used as the intermediate computation results of OP1 and OP4, in other words, the intermediate computation result of OP6 may be directly used for OP1 and OP4 with no need to perform computation twice.

The determining the intermediate computation result of the third operator as an input parameter of the fourth operator is further described below by using an example in which intermediate computation results of two first-type operators are the same. It is assumed that computational logic of the third operator and the fourth operator is as follows:

$$\tanh(x) = \frac{e^x - e^{-x}}{e^x + e^{-x}}$$

$$\tanh'(x) = \frac{(e^x + e^{-x})^2 - (e^x - e^{-x})^2}{(e^x + e^{-x})^2}$$

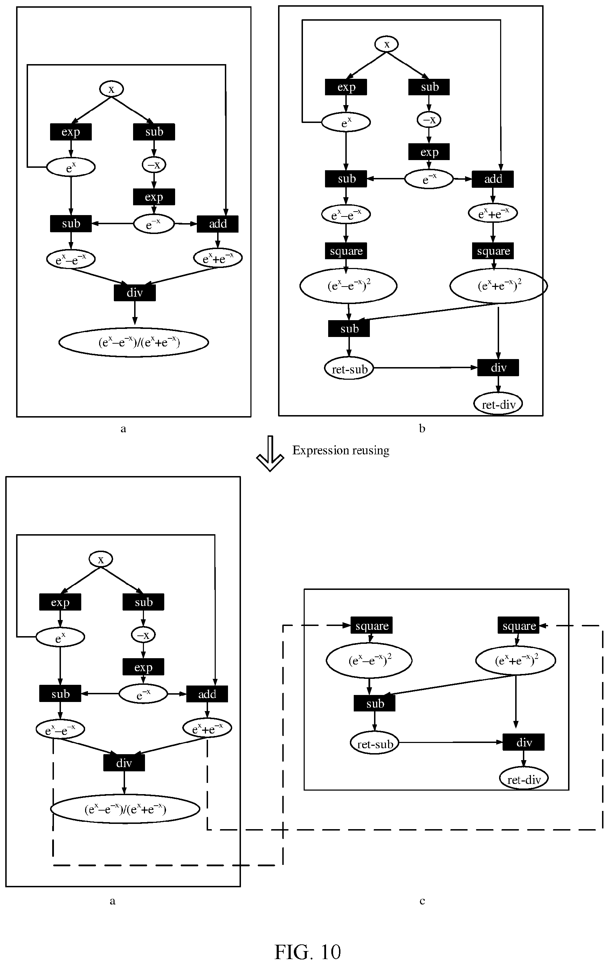

A tanh operator may be regarded as the third operator, and a tanh'(x) operator may be regarded as the fourth operator; or tanh'(x) may be regarded as the third operator, and a tanh operator may be regarded as the fourth operator. FIG. 10 is a schematic diagram of another neural network model processing method according to an embodiment of this application. As shown in FIG. 10, a description is provided by using the tanh operator and the tanh'(x) operator mentioned above as examples. a in FIG. 10 shows a subgraph corresponding to the tanh operator, in other words, a in FIG. 10 is used to represent computational logic of the tanh operator. An expression of the tanh operator has been provided above, and details are not described herein again. b in FIG. 10 shows a subgraph corresponding to the tanh'(x) operator, in other words, b in FIG. 10 is used to represent computational logic of the tanh'(x) operator. An expression of the tanh'(x) operator has been provided above, and details are not described herein again. It can be learned from a in FIG. 10 and b in FIG. 10 that, if an intermediate computation result in the computational logic of the tanh'(x) operator is the same as a computation result in the computational logic of the tanh operator, the first computation graph may be modified, and one subgraph is allowed to directly use an intermediate computation result obtained from the other subgraph. For example, as shown by c in FIG. 10, an intermediate computation result of the tanh operator is used as an input parameter of the tanh'(x) operator. The input parameter is that the intermediate computation result of the tanh operator may be directly used for the tanh'(x) operator.

In a specific implementation, the third operator may be a forward operator, and the fourth operator may be a backpropagation operator corresponding to the third operator; or the fourth operator is a forward operator, and the third operator is a backpropagation operator corresponding to the fourth operator. This is because the forward operator is an operator used in a forward signal propagation process, and for most forward operators, backpropagation operators corresponding to the forward operators are required. In deep learning network training, a backpropagation operator and an error are used to calculate a network error at each layer, and the network error is propagated, to train a parameter at each layer, so that an extremely small error is caused. A backpropagation operator can usually be understood as a derivative of a forward operator plus some operations, and derivatives of many operators and the operators have a large quantity of repeated computational logic in the deep learning field.

The neural network model processing method provided in this embodiment of this application is described above. Specifically, how to obtain a computation graph and how to optimize the computation graph are described. A deep learning framework needs to map an optimized computation graph to instructions and machine code on a hardware platform, that is, generate a kernel file. The following specifically describes this process.

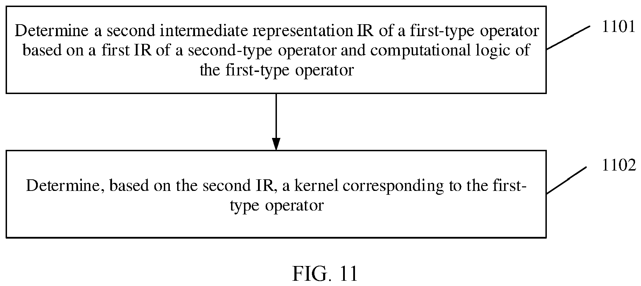

FIG. 11 is a schematic diagram of a process for generating a kernel file according to an embodiment of this application.

As shown in FIG. 11, the process for generating a kernel file may include the following steps.

1101: Determine a second intermediate representation IR of a first-type operator based on a first IR of a second-type operator and computational logic of the first-type operator.

Based on the computational logic of the first-type operator, a deep learning framework determines which second-type operators are included in the first-type operator, that is, determines which second-type operators form the first-type operator. Because in a registration process, an IR module registers with the deep learning framework based on a name of an operator, the deep learning framework may find, based on a name of the second-type operator, a name of an IR corresponding to the second-type operator, and may further load a function pointer corresponding to the IR corresponding to the operator. Then, the deep learning framework obtains, based on the function pointer, the IR corresponding to the second-type operator.

1102: Determine, based on the second IR, a kernel corresponding to the first-type operator.

After obtaining IRs corresponding to all the second-type operators included in the first-type operator, the deep learning framework combines the obtained IRs corresponding to all the second-type operators, to obtain an IR corresponding to the first-type operator. The deep learning framework compiles the IR corresponding to the first-type operator, to obtain a kernel file corresponding to the first-type operator.

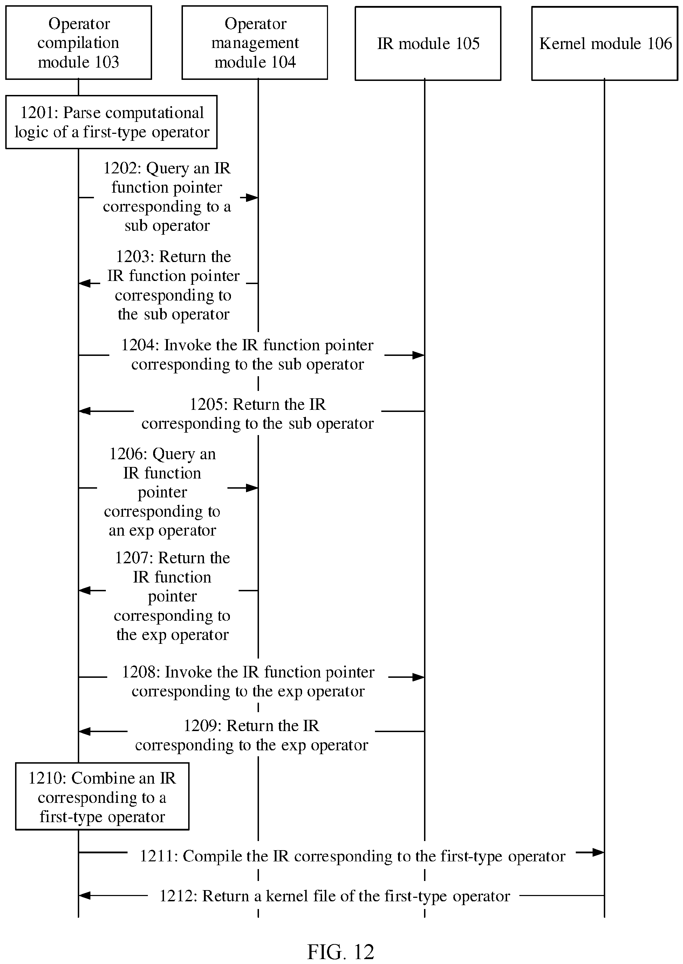

The following describes the foregoing process with reference to FIG. 12. FIG. 12 is a schematic diagram of a process for generating a kernel file according to an embodiment of this application. It is assumed that the first-type operator is the OP1 shown in FIG. 8. The following provides a description by using an example in which the first-type operator is the OP1.

1201: An operator compilation module 103 parses the computational logic of the first-type operator.

For example, if the first-type operator is the OP1, the operator compilation module 103 parses the computational logic of the first-type operator to learn computational logic of OP1. Second-type operators included in OP1 are a sub operator and an exp operator, the sub operator includes two inputs: x and y, an output of the sub operator is an input of the exp operator, and an output of the exp operator is an output of OP1.

1202: The operator compilation module 103 queries, based on a name of the sub operator, an operator management module 104 for an IR function pointer corresponding to the sub operator.

The deep learning framework may find, based on the name of the sub operator, a name of an IR corresponding to the sub operator, and may further load the IR function pointer corresponding to the sub operator.

1203: The operator management module 104 returns the obtained IR function pointer corresponding to the sub operator to the operator compilation module 103.

1204: The operator compilation module 103 obtains, from an IR module 105 by invoking the IR function pointer corresponding to the sub operator, the IR corresponding to the sub operator.

1205: The IR module 105 returns the IR corresponding to the sub operator to the operator compilation module 103.

1206: The operator compilation module 103 queries, based on a name of the exp operator, the operator management module 104 for an IR function pointer corresponding to the exp operator.

The deep learning framework may find, based on the name of the exp operator, a name of an IR corresponding to the exp operator, and may further load the IR function pointer corresponding to the exp operator.

1207: The operator management module 104 returns the obtained IR function pointer corresponding to the exp operator to the operator compilation module 103.

1208: The operator compilation module 103 obtains, from the IR module 105 by invoking the IR function pointer corresponding to the exp operator, the IR corresponding to the exp operator.

1209: The IR module 105 returns the IR corresponding to the exp operator to the operator compilation module 103.

1210: The operator compilation module 103 obtains, through combination, an IR corresponding to the first-type operator.

According to step 1202 to step 1209, the operator compilation module 103 obtains the IR corresponding to the sub operator and the IR corresponding to the exp operator. The operator compilation module 103 may combine, based on the computational logic of OP1, the IR corresponding to the sub operator and the IR corresponding to the exp operator, to obtain the IR corresponding to OP1.

1211: The operator compilation module 103 sends the IR corresponding to the first-type operator to a kernel module 106. This process is a process of compiling the IR corresponding to the first-type operator.

1212: The kernel module 106 returns, to the operator compilation module 103, a kernel file that is corresponding to the first-type operator and that is obtained through compilation.

The neural network model processing methods provided in embodiments of this application are described above. According to the solutions provided in embodiments of this application, the deep learning framework can learn the computational logic of the first-type operator. In this way, there are more opportunities for optimizing the computation graph. It can be understood that, to implement the foregoing functions, the foregoing deep learning framework includes a corresponding hardware structure and/or software module for implementing each function. A person of ordinary skill in the art should easily be aware that, in combination with the examples described in embodiments disclosed in this specification, modules, algorithms and steps may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In terms of a hardware structure, the deep learning frameworks in FIG. 3 to FIG. 12 each may be implemented by a physical device, may be implemented by a plurality of physical devices together, or may be a logical function module in a physical device. This is not specifically limited in embodiments of this application.

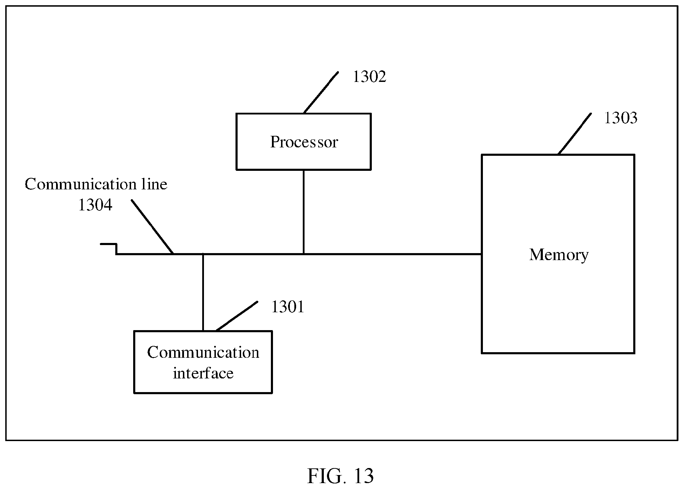

For example, the deep learning framework may be implemented by a computer device in FIG. 13. The computer device may also be referred to as a neural network model processing apparatus. FIG. 13 is a schematic diagram of a hardware structure of a computer device according to an embodiment of this application. The computer device includes a communication interface 1301 and a processor 1302, and may further include a memory 1303.

17

The communication interface 1301 may be configured to communicate with another device or a communication network such as an Ethernet, a radio access network (radio access network, RAN), or a wireless local area network (wireless local area network, WLAN) by using any apparatus such as a transceiver.

The processor 1302 includes but is not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. The processor 1302 is responsible for general processing. A communication line 1304 may provide various functions, including timing, a peripheral interface, voltage regulation, power management, and another control function. The memory 1303 may be configured to store data used when the processor 1302 performs an operation.

The memory 1303 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another optical disk storage, an optical disc storage (including a compact disc, a laser disc, an optical disc, a digital versatile disc, a Blu-ray disc, and the like), a disk storage medium, another magnetic storage device, or any other medium that can be used to carry or store expected program code in a form of an instruction or a data structure and that can be accessed by a computer. However, this is not limited thereto. The memory may exist independently, and is connected to the processor 1302 through the communication line 1304. The memory 1303 may alternatively be integrated with the processor 1302. If the memory 1303 and the processor 1302 are mutually independent devices, the memory 1303 is connected to the processor 1302. For example, the memory 1303 and the processor 1302 may communicate with each other by using the communication line. The communication interface 1301 and the processor 1302 may communicate with each other by using the communication line, and the communication interface 1301 may alternatively be directly connected to the processor 1302.

The communication line 1304 may include any quantity of interconnected buses and bridges, and the communication line 1304 links together various circuits including one or more processors 1302 represented by the processor 1302 and a memory represented by the memory 1303. The communication line 1304 may further link together various other circuits such as a peripheral device, a voltage regulator, and a power management circuit. These are all known in the art. Therefore, a further description is not provided in this application.

In a specific implementation, the deep learning framework may include a memory, configured to store computer-readable instructions. The deep learning framework may further include a communication interface coupled to the memory. The communication interface is configured to obtain an operation process of a neural network model, where the operation process is represented by at least one first-type operator and a plurality of second-type operators; in the operation process, the first-type operator may include a boundary identifier; computational logic of the first-type operator is represented by a group of second-type operators; and for any first-type operator, a range of a second-type operator that may be included in the any first-type operator is indicated by a boundary identifier in the any first-type operator. The deep learning framework further includes a processor coupled to the communication interface. The processor is configured to execute the computer-readable instructions in the memory, to perform the following operation: obtaining a first computation graph of the neural network model based on the operation process.

In a specific implementation, the first computation graph may include a main graph and a subgraph. The processor is specifically configured to determine the main graph and the subgraph of the neural network model based on the operation process, where the first-type operator in the main graph is indicated by the boundary identifier, the second-type operator in the main graph is indicated by a name of the second-type operator, the main graph is used to output a result of the operation process, the subgraph may include a name of the second-type operator that may be included in the any first-type operator, the subgraph is used to output a result of a first-type operator, and one subgraph represents computational logic of one first-type operator.

In a specific implementation, the processor is further configured to perform optimization processing on the first computation graph by using the first-type operator as a processing granularity, to obtain a second computation graph.

In a specific implementation, the first-type operator may include a third operator and a fourth operator, and the third operator and the fourth operator may include same computational logic. The processor is specifically configured to fuse a subgraph corresponding to the third operator and a subgraph corresponding to the fourth operator, to obtain a fused subgraph, where the second computation graph may include the fused subgraph.

In a specific implementation, the first-type operator may include a fifth operator and a sixth operator, and an intermediate computation result of the fifth operator is the same as an intermediate computation result of the sixth operator. The processor is specifically configured to use the intermediate computation result of the fifth operator as an input parameter of the sixth operator.

In a specific implementation, the third operator is a forward operator, and the fourth operator is a backpropagation operator corresponding to the third operator; or the fourth operator is a forward operator, and the third operator is a backpropagation operator corresponding to the fourth operator.

In a specific implementation, the processor is further configured to: determine a second intermediate representation IR of the first-type operator based on a first IR of the second-type operator and the computational logic of the first-type operator; and determine, based on the second IR determined by an operator compilation module, a kernel function kernel corresponding to the first-type operator.

In this embodiment of this application, the communication interface may be regarded as a programming interface module 101 of the deep learning framework, and the processor having a processing function may be regarded as a processing module of the deep learning framework. Specifically, the processing module may include a computation graph processing module 102, and an operator compilation module 103, an operator management module 104, an IR module 105, and a kernel module 106 that are included in an operator layer. The memory is regarded as a storage module (not shown in the figure) of the deep learning framework.

After obtaining an IR corresponding to a required operator, the operator compilation module 103 sends the IR corresponding to the required operator to the kernel module 106. The kernel module 106 compiles the obtained IR to obtain a kernel file, and returns the kernel file to the operator compilation module 103. After obtaining the kernel file, the operator compilation module 103 may send the kernel file to an execution device, for example, a hardware platform. This process is mapping an optimized computation graph to instructions and machine code on a hardware platform (in this embodiment of this application, the hardware platform is also referred to as an execution device sometimes, and the hardware platform and the execution device have a same meaning when a difference between the hardware platform and the execution device is not emphasized). The deep learning framework provides, for each operator, a kernel function (kernel) executed on a CPU or an artificial intelligence processor. The kernel function is an instruction and machine code on the hardware platform. The following describes an execution device provided in this embodiment of this application.

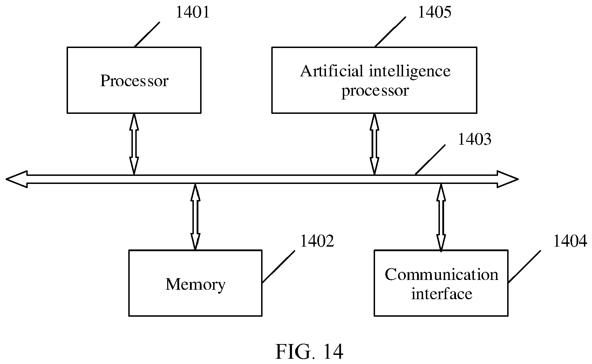

FIG. 14 is a schematic diagram of a structure of an execution device according to an embodiment of this application. As shown in FIG. 14, the execution device may include a processor 1401, a memory 1402, a communication bus 1403, and a communication interface 1404. An artificial intelligence processor 1405 is connected to the memory 1402 and the communication interface 1404 by using the communication bus.

The processor 1401 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The processor 1401 may be a microprocessor or the processor 1401 may be any conventional processor or the like.

The processor 1401 may be an integrated circuit chip and has a signal processing capability. In an implementation process, the steps in the neural network processing method in this application may be completed by using an integrated logic circuit in hardware in the processor 1401 or instructions in a form of software.

The memory 1402 may be a read-only memory (read-only memory, ROM), a random access memory (random access memory, RAM), or another memory. In this embodiment of this application, the memory 1402 is configured to store data and various software programs, for example, a program for splitting a neural network model based on a determined target splitting path in this embodiment of this application.

Optionally, in this embodiment of this application, the memory may include a physical apparatus configured to store information. Generally, information is digitized and then stored in a medium in an electrical form, a magnetic form, an optical form, or the like. The memory described in this implementation may further include: an apparatus for storing information in an electric energy form, for example, a RAM or a ROM; a device for storing information in a magnetic energy form, for example, a hard disk, a floppy disk, a magnetic tape, a magnetic core memory, a magnetic bubble memory, or a USB flash drive; and a device for storing information in an optical form, for example, a CD or DVD. Certainly, there are other forms of memory, for example, a quantum memory and a graphene memory.

The communication interface 1404 uses a transceiver apparatus, for example, but is not limited to, a transceiver, to implement communication between the execution device and another device or a communication network. For example, a model file sent by the another device may be received through the communication interface 1404.

Optionally, the execution device may further include at least one artificial intelligence processor 1405.

The artificial intelligence processor 1405 may be mounted to a host CPU (host CPU) as a coprocessor, and the host CPU allocates a task to the artificial intelligence processor 1405. In actual application, the artificial intelligence processor 1405 can implement one or more operations. A network processing unit (network processing Unit, NPU) NPU is used as an example. A core part of the NPU is an operational circuit, and the operational circuit is controlled by using a controller, to extract matrix data in the memory 1402 and perform a multiplication operation and an addition operation.

Optionally, the artificial intelligence processor 1405 may include eight clusters (cluster), and each cluster includes four artificial intelligence processor cores.

Optionally, the artificial intelligence processor 1405 may be an artificial intelligence processor with a reconfigurable architecture. Herein, the reconfigurable architecture means: If an artificial intelligence processor can flexibly change its architecture based on different application requirements by utilizing reusable hardware resources, to provide an architecture satisfying each specific application requirement. In this case, the artificial intelligence processor is referred to as a reconfigurable computing system, and the architecture of the artificial intelligence processor is referred to as a reconfigurable architecture.

It should be understood that, the execution device is only an example provided in embodiments of this application, and the execution device may include more or fewer components than components that are shown, may include a combination of two or more components, or may include components in different configurations.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

A person of ordinary skill in the art may understand that all or a part of the steps of the methods in the foregoing embodiments may be implemented by a program instructing related hardware. The program may be stored in a computer-readable storage medium. The storage medium may include a ROM, a RAM, a magnetic disk, an optical disc, or the like.

The foregoing describes in detail the neural network model processing method and the related device that are provided in embodiments of this application. Specific examples are used in this specification to describe the principle and implementations of this application. The foregoing embodiments are merely intended to help understand the method and ideas of this application. In addition, a person of ordinary skill in the art may make variations and modifications to this application in terms of the specific implementations and application scopes based on the ideas of this application. Therefore, the content of this specification shall not be construed as a limitation to this application.

**Claims**

1. A neural network model processing method, comprising:

   obtaining an operation process of a neural network model, wherein the operation process is represented by at least one first-type operator and a plurality of second-type operators; in the operation process, the first-type operator comprises a boundary identifier, and computational logic of the first-type operator is represented by a group of second-type operators; and for any first-type operator, a range of second-type operators comprised in the any first-type operator is indicated by a boundary identifier in the any first-type operator; and
   obtaining a first computation graph of the neural network model based on the operation process.

2. The processing method according to claim 1, wherein the first computation graph comprises a main graph and a subgraph; and the obtaining a first computation graph of the neural network model based on the operation process comprises:
   determining the main graph and the subgraph of the neural network model based on the operation process, wherein the first-type operator in the main graph is indicated by the boundary identifier, the second-type operator in the main graph is indicated by a name of the second-type operator, the main graph is used to output a result of the operation process, the subgraph comprises a name of the second-type operator that is comprised in the any first-type operator, the subgraph is used to output a result of a first-type operator, and one subgraph represents computational logic of one first-type operator.

3. The processing method according to claim 1 or 2, wherein the method further comprises:
   performing optimization processing on the first computation graph by using the first-type operator as a processing granularity, to obtain a second computation graph.

4. The processing method according to claim 3, wherein the first-type operator comprises a third operator and a fourth operator, and the third operator and the fourth operator comprise same computational logic; and the performing optimization processing on the first computation graph by using the first-type operator as a processing granularity comprises:

   fusing a subgraph corresponding to the third operator and a subgraph corresponding to the fourth operator, to obtain a fused subgraph, wherein the second computation graph comprises the fused subgraph.

5. The processing method according to claim 3 or 4, wherein the first-type operator comprises a fifth operator and a sixth operator, and an intermediate computation result of the fifth operator is the same as an intermediate computation result of the sixth operator; and the performing optimization processing on the first computation graph by using the first-type operator as a processing granularity comprises:

   using the intermediate computation result of the fifth operator as an input parameter of the sixth operator.

6. The processing method according to claim 4 or 5, wherein the third operator is a forward operator, and the fourth operator is a backpropagation operator corresponding to the third operator; or the fourth operator is a forward operator, and the third operator is a backpropagation operator corresponding to the fourth operator.

7. The processing method according to any one of claims 1 to 6, wherein the method further comprises:

   determining a second intermediate representation IR of the first-type operator based on a first IR of the second-type operator and the computational logic of the first-type operator; and
   determining, based on the second IR, a kernel function kernel corresponding to the first-type operator.

8. The processing method according to any one of claims 1 to 7, wherein an input of the operation process is tensor data, and the tensor data is used to describe a feature of data in at least one of the following scenarios: speech recognition, computer vision CV, video processing, image recognition, and natural language processing NPL.

9. A neural network model processing apparatus, comprising:

   a programming interface module, configured to obtain an operation process of a neural network model, wherein the operation process is represented by at least one first-type operator and a plurality of second-type operators; in the operation process, the first-type operator comprises a boundary identifier, and computational logic of the first-type operator is represented by a group of second-type operators; and for any first-type operator, a range of second-type operators comprised in the any first-type operator is indicated by a boundary identifier in the any first-type operator; and
   a computation graph processing module, configured to obtain a first computation graph of the neural network model based on the operation process obtained by the programming interface module.

10. The processing apparatus according to claim 9, wherein the first computation graph comprises a main graph and a subgraph; and the computation graph processing module is specifically configured to:
    determine the main graph and the subgraph of the neural network model based on the operation process, wherein the first-type operator in the main graph is indicated by the boundary identifier, the second-type operator in the main graph is indicated by a name of the second-type operator, the main graph is used to output a result of the operation process, the subgraph comprises a name of the second-type operator that is comprised in the any first-type operator, the subgraph is used to output a result of a first-type operator, and one subgraph represents computational logic of one first-type operator.

11. The processing apparatus according to claim 9 or 10, wherein the computation graph processing module is further configured to:
    perform optimization processing on the first computation graph by using the first-type operator as a processing granularity, to obtain a second computation graph.

12. The processing apparatus according to claim 11, wherein the first-type operator comprises a third operator and a fourth operator, and the third operator and the fourth operator comprise same computational logic; and the computation graph processing module is specifically configured to:
    fuse a subgraph corresponding to the third operator and a subgraph corresponding to the fourth operator, to obtain a fused subgraph, wherein the second computation graph comprises the fused subgraph.

**13.** The processing apparatus according to claim 9 or 10, wherein the first-type operator comprises a fifth operator and a sixth operator, and an intermediate computation result of the fifth operator is the same as an intermediate computation result of the sixth operator; and the computation graph processing module is specifically configured to: use the intermediate computation result of the fifth operator as an input parameter of the sixth operator.

**14.** The processing apparatus according to claim 10 or 11, wherein the third operator is a forward operator, and the fourth operator is a backpropagation operator corresponding to the third operator; or the fourth operator is a forward operator, and the third operator is a backpropagation operator corresponding to the fourth operator.

**15.** The processing apparatus according to any one of claims 9 to 14, wherein the apparatus further comprises an operator compilation module and a kernel module, wherein

the operator compilation module is configured to determine a second IR of the first-type operator based on a first intermediate representation IR of the second-type operator and the computational logic of the first-type operator; and
the kernel module is configured to determine, based on the second IR determined by the operator compilation module, a kernel function kernel corresponding to the first-type operator.

**16.** The processing apparatus according to any one of claims 9 to 15, wherein an input of the operation process is tensor data, and the tensor data is used to describe a feature of data in at least one of the following scenarios: speech recognition, computer vision CV, video processing, image recognition, and natural language processing NPL.

**17.** A neural network model processing apparatus, comprising:

a memory, configured to store computer-readable instructions; and
a processor coupled to the memory, configured to execute the computer-readable instructions in the memory, to perform the method according to any one of claims 1 to 8.

**18.** A computer-readable storage medium, wherein when instructions are run on a computer apparatus, the computer apparatus is enabled to perform the method according to any one of claims 1 to 8.

**19.** A computer program, wherein when the computer program runs on a computer, the computer performs the method according to any one of claims 1 to 8.

Framework layer

Programming interface module 101

Computation graph processing module 102

Graph compilation unit 1021

Graph optimization unit 1022

Operator layer

Operator compilation module 103

Operator management module 104

IR module 105

Kernel module 106

FIG. 1

```
Operator management module 104                    IR module 105


                         1010: Initiate a registration process of
                         ◄──── an IR corresponding to an operator

  1020: Establish a correspondence
  between a name of the operator and a
  name of an IR function of the
  operator


              ┌ ─ ─ ─ ─  1030: Return a registration ─ ─ ─►
                          success notification
```

FIG. 2

```
┌─────────────────────────────────────────────────────────┐
│ Obtain an operation process of a neural network model, where the │       301
│ operation process is represented by at least one first-type operator │  ╱──
│ and a plurality of second-type operators                 │
└─────────────────────────────────────────────────────────┘
                            │
                            ▼
┌─────────────────────────────────────────────────────────┐
│ Determine a first computation graph of the neural network model │        302
│ based on the operation process                          │  ╱──
└─────────────────────────────────────────────────────────┘
```

FIG. 3

FIG. 4

EP 4 116 885 A1

FIG. 5

Obtain an operation process of a neural network model, where the operation process is represented by a first-type operator and a second-type operator — 601

Determine a first computation graph of the neural network model based on the operation process — 602

Perform optimization processing on the first computation graph by using the first-type operator as a processing granularity, to obtain a second computation graph — 603

FIG. 6

FIG. 7

EP 4 116 885 A1

FIG. 8

FIG. 9

Expression reusing

FIG. 10

Determine a second intermediate representation IR of a first-type operator based on a first IR of a second-type operator and computational logic of the first-type operator    1101

Determine, based on the second IR, a kernel corresponding to the first-type operator    1102

FIG. 11

| Operator compilation module 103 | Operator management module 104 | IR module 105 | Kernel module 106 |
|---|---|---|---|

1201: Parse computational logic of a first-type operator

1202: Query an IR function pointer corresponding to a sub operator

1203: Return the IR function pointer corresponding to the sub operator

1204: Invoke the IR function pointer corresponding to the sub operator

1205: Return the IR corresponding to the sub operator

1206: Query an IR function pointer corresponding to an exp operator

1207: Return the IR function pointer corresponding to the exp operator

1208: Invoke the IR function pointer corresponding to the exp operator

1209: Return the IR corresponding to the exp operator

1210: Combine an IR corresponding to a first-type operator

1211: Compile the IR corresponding to the first-type operator

1212: Return a kernel file of the first-type operator

FIG. 12

FIG. 13

1401

1405

Processor

Artificial intelligence
processor

1403

1402

Memory

1404

Communication
interface

FIG. 14

## INTERNATIONAL SEARCH REPORT

| | International application No. |
|---|---|
| | **PCT/CN2021/082967** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, BAIDU, CNPAT, CNKI, IEEE: 神经网络, 深度学习, 框架, 编译, 优化, 融合, 算子, 计算图, 边界, IR, DL, TVM, OP, neural network, deep learning, framework, compilation, optimization, fusion, operator, computational graph, boundary

**C. DOCUMENTS CONSIDERED TO BE RELEVANT**

| Category* | Citation of document, with indication, where appropriate, of the relevant passages | Relevant to claim No. |
|---|---|---|
| Y | CN 109740751 A (CAMBRICON TECHNOLOGIES CO., LTD.) 10 May 2019 (2019-05-10) description paragraphs [0039]-[0150] | 1-19 |
| Y | Jittor开发团队 (Jittor Development Team). "元算子: 通过元算子实现自己的卷积层 (Non-official translation: Meta Operator: Create Your Own Convolutional Layer with Meta Operators)" *https://cg.cs.tsinghua.edu.cn/jittor/tutorial/2020-3-17-09-50-meta_op/*, 17 March 2020 (2020-03-17), article, pages 1-4 | 1-19 |
| A | CN 110659728 A (SHANGHAI CAMBRICON INFORMATION TECHNOLOGY CO., LTD.) 07 January 2020 (2020-01-07) entire document | 1-19 |
| A | CN 109543825 A (SHANGHAI CAMBRICON INFORMATION TECHNOLOGY CO., LTD.) 29 March 2019 (2019-03-29) entire document | 1-19 |
| A | US 2019303762 A1 (XILINX, INC.) 03 October 2019 (2019-10-03) entire document | 1-19 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 June 2021** | **23 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/082967**

| Patent document cited in search report | | | Publication date (day/month/year) | Patent family member(s) | | | Publication date (day/month/year) |
|---|---|---|---|---|---|---|---|
| CN | 109740751 | A | 10 May 2019 | CN | 109740751 | B | 14 April 2020 |
| CN | 110659728 | A | 07 January 2020 | None | | | |
| CN | 109543825 | A | 29 March 2019 | CN | 109543825 | B | 01 December 2020 |
| US | 2019303762 | A1 | 03 October 2019 | CN | 110321999 | A | 11 October 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010232059